# DEMANDE DE BREVET EUROPEEN

(11) **EP 1 375 327 A1**
(43) Date de publication de la demande: **02.01.2004**
(21) Numéro de dépôt: 03356089.7
(22) Date de dépôt: 12.06.2003
(51) Int. Cl.: B62K 21/06

(54) **Jeu de direction pour bicyclettes, cycles et similaires**

(30) Priorité: 28.06.2002 FR 0208273
(71) Demandeur: STRONGLIGHT S.A., 42000 Saint-Etienne (FR)
(72) Inventeur: Crozet, Raymond, 42100 Saint Etienne (FR); Jaligot, Michel, 42400 Saint Chamond (FR)
(74) Mandataire: Dupuis, François

(57) **Abrégé**

Le jeu de direction pour bicyclettes, cycles et similaires du type comprenant dans une cartouche monobloc un jeu de roulement (3) inséré entre une coupelle extérieure (2) et une coupelle intérieure (4), la coupelle extérieure prenant appui contre la paroi intérieure d'un alésage dans le tube de douille, est remarquable en ce qu'il comprend monobloc ladite cartouche incluant un joint d'étanchéité armé monté flottant, sur laquelle est positionnée une bague recevant elle-même extérieurement un joint en appui sur la coupelle extérieure, ladite bague étant en contact avec la coupelle intérieure de la cartouche, la bague recevant dans sa partie supérieure un joint torique et un anneau de compression pour donner les contraintes de compression.

## Description

L'invention se rattache au secteur technique des composants pour cycles, bicyclettes et plus particulièrement aux jeux de direction utilisés notamment dans la liaison douille de direction - pivot de fourche et potence support de guidon.

La conception de jeux de direction pour permettre l'adaptation et l'orientation de la potence de guidon par rapport à la douille de direction notamment, a largement évolué à des fins de simplification et de réduction du nombre de composants. Il est actuellement proposé sur le marché des ensembles dénommés cartouches incluant d'une manière monobloc le jeu de roulement à aiguilles ou à billes et les coupelles extérieure et intérieure de roulement, cet ensemble étant ensuite positionné soit dans l'alésage récepteur conique de la douille de direction, soit dans des cuvettes à profil extérieur cylindrique et profil intérieur conique emmanché dans la douille de direction et entraînant ensuite la mise en place d'éléments complémentaires de serrage rapportés.

Le problème posé réside néanmoins dans la difficulté de réglage en position des cartouches se trouvant de part et d'autre des extrémités de la douille de direction, avec très souvent un problème de désalignement, de sorte que cela peut entraîner une détérioration des joints d'étanchéité par usure et contact ou l'apparition d'un jeu.

Un autre problème posé selon l'art antérieur réside dans la recherche d'une simplification en cours de montage et d'une réduction de nombre de pièces d'un ensemble de jeu de direction.

Ces caractéristiques et d'autres encore ressortiront bien de la suite de la description.

Selon une première caractéristique de l'invention, le jeu de direction pour bicyclettes, cycles et similaires du type comprenant dans une cartouche monobloc un jeu de roulement inséré entre une coupelle extérieure et une coupelle intérieure, la coupelle extérieure prenant appui contre la paroi intérieure d'un alésage dans le tube de douille, est remarquable en ce qu'il comprend monobloc, ladite cartouche incluant un joint d'étanchéité armé monté flottant, sur laquelle est positionnée une bague recevant elle-même extérieurement un joint en appui sur la coupelle extérieure, ladite bague étant en contact avec la coupelle intérieure de la cartouche, la bague recevant dans sa partie supérieure un joint torique et un anneau de compression pour donner les contraintes de compression.

Selon une autre caractéristique, la coupelle extérieure est agencée sur sa paroi intérieure avec une échancrure autorisant le montage flottant d'un joint d'étanchéité profilé et recevant un insert pour compenser un désalignement des zones de contact lié à des contraintes de fabrication et d'usinage.

Ces caractéristiques et d'autres encore ressortiront bien de la suite de la description.

Pour fixer l'objet de l'invention illustré d'une manière non limitative aux figures des dessins où :

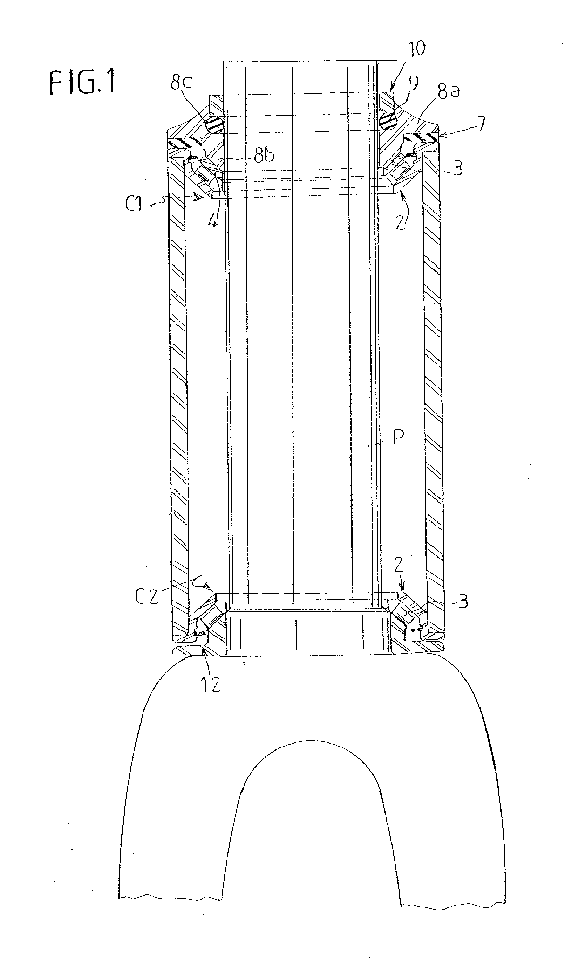

- La figure 1 est une vue en coupe longitudinale d'une douille de direction recevant deux jeux de direction selon l'invention, supérieur et inférieur.

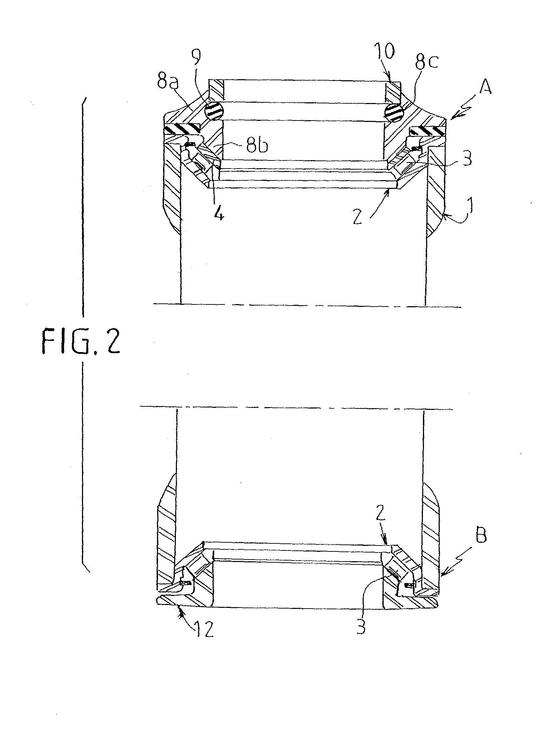

- La figure 2 est une vue partielle et en coupe à plus grande échelle, illustrant le positionnement des cartouches supérieure et inférieure des jeux de direction.

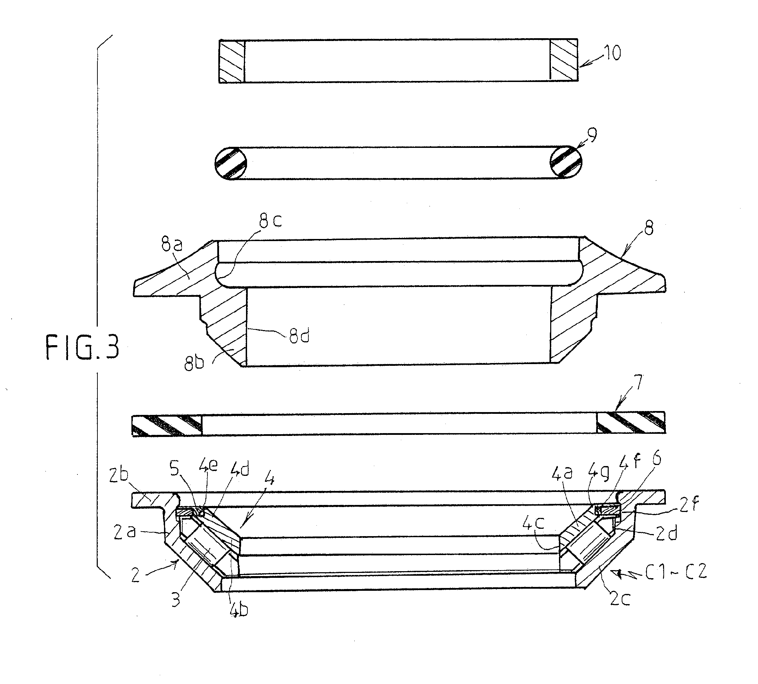

- La figure 3 est une vue partielle éclatée avant montage du jeu de direction supérieur.

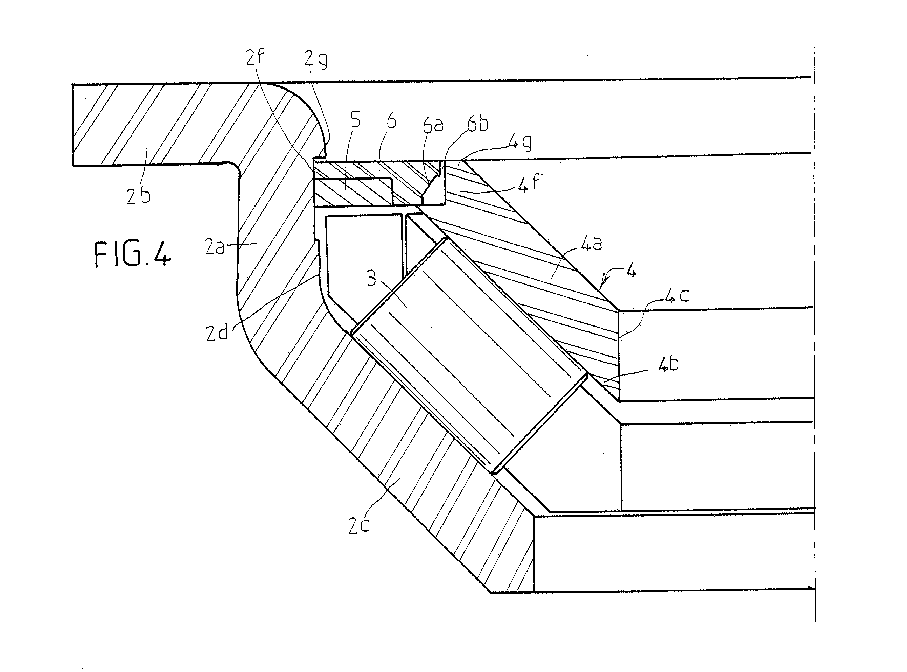

- La figure 4 est une vue partielle avec effet zoom, illustrant une demi-partie du jeu de direction supérieur.

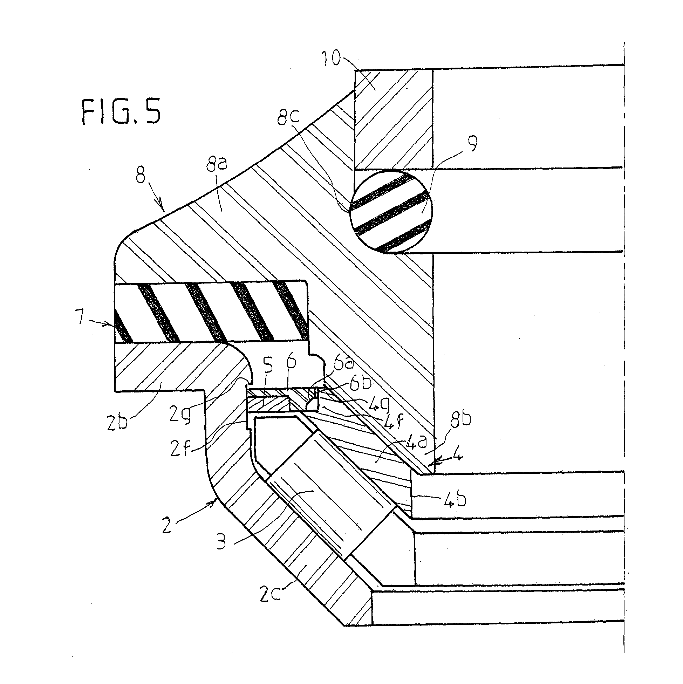

- La figure 5 est une vue partielle avec effet zoom, selon la figure 4, illustrant l'ensemble monté, avec la bague, le joint torique et l'anneau de compression.
- La figure 6 est une vue partielle avec effet zoom en demi-partie de la cartouche dans la partie basse de la douille de direction destinée à être positionnée.

Afin de rendre plus concret l'objet de l'invention, on le décrit maintenant d'une manière non limitative illustrée aux figures des dessins.

On a représenté par (1) une douille de direction de bicyclettes et similaires, susceptible de recevoir à chacune de ses extrémités un jeu de direction (A-B) dans leur identification générale, permettant l'insertion d'un pivot de fourche. Chaque jeu de direction est conformé pour inclure une cartouche (C1-C2) profilée susceptible d'être emmanchée à force à l'intérieur de l'alésage de la douille de direction. Selon l'invention, les deux cartouches sont identiques, de sorte que l'on procédera à la description d'une seule.

Chaque cartouche comprend une coupelle extérieure (2) profilée, avec une paroi cylindrique périphérique (2a) susceptible d'être engagée à force dans l'alésage de la douille de direction, ladite paroi se prolongeant en partie haute avec une partie (2b) horizontale périphérique formant collerette venant en appui sur le chant d'extrémité de la douille de direction. La paroi cylindrique (2a) se prolonge vers le bas par une paroi (2c) conique orientée intérieurement constituant le siège des roulements à aiguilles (3). La coupelle intérieure (4) présente un profil conique (4a) avec une extrémité basse (4b), une paroi (4c) plane rectiligne et verticale parallèle à l'axe longitudinal du jeu de direction. L'extrémité supérieure (4d) présente une découpe (4e) dont la fonction apparaîtra par la suite. Le plan supérieur (4f) de la coupelle adjacent à ladite découpe est rectiligne et horizontal. Un joint d'étanchéité périphérique (5) profilé et armé d'une âme ou insert (6) en laiton ou autre matériau est disposé en appui sur la paroi intérieure (2d) de la coupelle extérieure et la paroi en regard de la coupelle intérieure. Plus particulièrement, la paroi intérieure de la coupelle extérieure est agencée avec une échancrure ou évidement (2f) établi sur une partie de sa hauteur selon une distance supérieure à l'épaisseur du joint d'étanchéité armé de l'insert. Cet insert en laiton assure une rigidification de l'ensemble. Le joint d'étanchéité avec insert vient ainsi en appui contre la face interne de la paroi (2a) de la coupelle extérieure, à l'endroit de l'échancrure et en appui sur une partie d'extrémité en forme de bec (4g) de la coupelle intérieure. Le joint d'étanchéité (5) avec insert (6) présente, côté coupelle intérieure, un pan oblique (6a) et sa face intérieure de chant (6b) n'est pas en contact avec le profil en regard de la coupelle intérieure. Le joint d'étanchéité avec insert est ainsi monté flottant dans l'espace aménagé, défini précédemment, de sorte qu'il permet une correction d'alignement des zones de contact avec le pivot de fourche (P). Ledit joint est monté par clipsage dans son logement et est retenu en position par la partie d'extrémité formant bec (2g) de l'échancrure (2f) précitée formant butée.

L'ensemble ainsi défini constitue la cartouche.

Le jeu de direction est ensuite complété par sa partie avant supérieure avec un joint d'étanchéité (7) et une bague (8) supérieure qui présente une collerette (8a) en appui sur le joint d'étanchéité (7), et un profil inférieur (8b) en appui de référence sur la coupelle intérieure précitée. La bague (8) présente un alésage (8d) et coulisse à l'extérieur du pivot de fourche. La bague vient s'ajuster par un appui dit de référence sur la paroi en regard de la coupelle inférieure de la cartouche. La bague (8) est ainsi aménagée dans son plan supérieur avec un évidement (8c) permettant la réception d'un joint torique (9) et d'un anneau (10) de compression complétant le guidage du pivot de fourche. De manière similaire dans la partie inférieure, la douille de direction reçois une cartouche qui comprend également un joint d'étanchéité avec insert, disposé entre les coupelles inférieure et supérieure dans la même configuration que précédemment, ainsi qu'une bague (12) venant en appui contre la face intérieure de la coupelle intérieure.

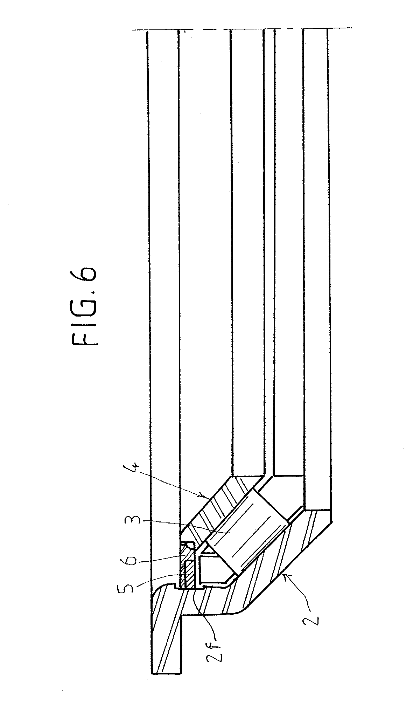

Le jeu de direction ainsi réalisé offre de grands avantages. Son montage est aisé, avec un nombre de pièces réduit, et il permet également de manière très avantageuse une correction d'alignement des zones de contact et de butée avec le pivot de fourche. La liaison est alors améliorée et l'utilisateur trouve un meilleur confort dans l'utilisation de cet ensemble. Le jeu de direction inférieur inclut la cartouche (C2) représentée figure 6 et présente substantiellement le même aménagement.

## Revendications

1. Jeu de direction pour bicyclettes, cycles et similaires du type comprenant dans une cartouche monobloc un jeu de roulement (3) inséré entre une coupelle extérieure (2) et une coupelle intérieure (4), la coupelle extérieure prenant appui contre la paroi intérieure d'un alésage dans le tube de douille, **caractérisé en ce qu'**il comprend monobloc ladite cartouche incluant un joint d'étanchéité armé monté flottant, sur laquelle est positionnée une bague recevant elle-même extérieurement un joint en appui sur la coupelle extérieure, ladite bague étant en contact avec la coupelle intérieure de la cartouche, la bague recevant dans sa partie supérieure un joint torique et un anneau de compression pour donner les contraintes de compression.

2. Jeu de direction selon la revendication 1, **caractérisé en ce que** la coupelle extérieure est agencée sur sa paroi intérieure (2d) avec une échancrure (2f) autorisant le montage flottant d'un joint d'étanchéité (5) profilé et recevant un insert (6) pour compenser un désalignement des zones de contact.

3. Jeu de direction selon l'une quelconque des revendications 1 et 2, **caractérisé en ce que** la coupelle extérieure comprend une paroi cylindrique (2a) emmanchée à force dans la douille de direction, se prolongeant en partie haute par une partie (2b) horizontale formant collerette et par une paroi inférieur (2c) conique orientée intérieurement et formant le siège des roulements.

4. Jeu de direction selon l'une quelconque des revendications 1 et 3, **caractérisé en ce que** la coupelle intérieure (4) présente un profil conique (4a) avec une partie basse (4b) et une paroi rectiligne verticale (4e), l'extrémité supérieure (4d) présentant une découpe (4e), le plan supérieur (4f) de la coupelle adjacent à ladite découpe étant rectiligne et horizontal et présentant un bec (4g) d'appui du joint d'étanchéité (5).

5. Jeu de direction selon la revendication 2, **caractérisé en ce que** le joint d'étanchéité (5) est monté flottant dans l'échancrure (2f) formée sur le profil de la coupelle extérieure et **en ce que** l'échancrure (2f) est établie sur une partie de la hauteur de la paroi de ladite coupelle extérieure selon une distance supérieure à l'épaisseur du joint d'étanchéité qui est monté et positionné par clipsage, ledit joint étant monté dans l'échancrure (2f) en étant maintenu avec la partie bec formant butée.

6. Jeu de direction selon la revendication 5, **caractérisé en ce que** le joint d'étanchéité comprend un insert.

7. Jeu de direction selon la revendication 6, **caractérisé en ce que** l'insert est en laiton.

8. Jeu de direction pour bicyclettes, cycles et similaires du type comprenant dans une cartouche monobloc un jeu de roulement (3) inséré entre une coupelle extérieure (2) et une coupelle intérieure (4), la coupelle extérieure prenant appui contre la paroi intérieure d'un alésage dans le tube de douille, **caractérisé en ce qu'**il comprend monobloc ladite cartouche incluant un joint d'étanchéité armé monté flottant, sur laquelle est positionnée une bague recevant elle-même extérieurement un joint en appui sur la coupelle extérieure, ladite bague étant en contact avec la coupelle intérieure de la cartouche.
